# EUROPEAN PATENT APPLICATION

(11) **EP 2 486 782 A1**
(43) Date of publication of application: **15.08.2012**
(21) Application number: 10846627.7
(22) Date of filing: 30.11.2010
(51) Int. Cl.: A01G 7/00, G01N 27/00, G01N 33/48

(54) **PLANT NUTRITIONAL STATE DIAGNOSIS METHOD, PLANT NUTRITIONAL STATE RECOVERY METHOD, PLANT NUTRITIONAL STATE DIAGNOSIS DEVICE, AND PLANT NUTRITIONAL STATE RECOVERY DEVICE**

(30) Priority: 25.02.2010 JP 2010040643
(71) Applicant: Meiji University, Tokyo 101-8301 (JP); Takano Co., Ltd., Kamiina-gun Nagano 399-4301 (JP)
(72) Inventor: NAKABAYASHI Kazushige, Kawasaki-shi Kanagawa 214-8571 (JP); KARIBE Makoto, Kawasaki-shi Kanagawa 214-8571 (JP); NAKAHARA Kenji, Kamiina-gun Nagano 399-4301 (JP)
(74) Representative: Zeestraten, Albertus W. J.
(86) International application number: PCT/JP2010/071339
(87) International publication number: WO 2011/104964

(57) **Abstract**

What is provided by the present invention are a method of diagnosing the nutritional status of a plant and a method of restoring the nutritional status of a plant quickly and accurately. Also, an apparatus of diagnosing the nutritional status of a plant and an apparatus of restoring the nutritional status of a plant quickly and accurately, are provided. The method of restoring the nutritional status of a plant includes the steps of: (a) detecting a bioelectrical potential of the plant at a control frequency and at one or more detection frequencies; (b) diagnosing the nutritional status of the plant based on the bioelectrical potential detected at the control frequency and the bioelectrical frequency detected at the detection frequency; and (c) restoring the nutritional status of the plant by a stimulation in which the plant is exposed to blinking light with a frequency of 44 Hz or less in a case where the nutrition status of the plant is diagnosed as being in a defective state in the step (b).

## Description

### TECHNICAL FIELD

The present invention relates to a method of diagnosing the nutritional status of a plant, a method of restoring the nutritional status of a plant, an apparatus of diagnosing the nutritional status of a plant, and an apparatus of restoring the nutritional status of a plant.
Priority is claimed on Japanese Patent Application No. 2010-40643, filed February 25, 2010, the content of which is incorporated herein by reference.

### BACKGROUND ART

Elements such as nitrogen, phosphorus, potassium, or the like are essential for growing plants in addition to the sun light, carbon dioxide, and water. Even though these elements exist in soil, they are much more in need for plants. Therefore, a fertilizer containing plenty of such essential elements is placed to soil in improve a plant growth.
It has been reported recently that a plant growth is improved by exposing the plant to a low-frequency stimulation such as light or the like (see Patent Literatures 1 to 3).
Also, it has been known that there is a relationship between a bioelectrical potential of a plant and a status of the plant. Therefore, a cultivation method tailored to the plant status, which is obtained from the bioelectrical potential, has been investigated (see Patent Literatures 4 to 5).

### [Related Art Literature]

### Patent Literature

Patent Literature 1: Japanese Unexamined Patent Application, First Publication No. 2004-089031
Patent Literature 2: Japanese Unexamined Patent Application, First Publication No. 2007-050004
Patent Literature 3: Japanese Unexamined Patent Application, First Publication No. 2001-251961
Patent Literature 4: Japanese Unexamined Patent Application, First Publication No. H9-056258
Patent Literature 5: Japanese Unexamined Patent Application, First Publication No. 2006-145247

### DISCLOSURE OF INVENTION

As explained above, a fertilizer is applied to soil to improve a plant growth. However, in a case where a balance of concentrations of elements in the soil or the medium, the nutritional status of the plant becomes poor. Therefore, an excess amount of fertilizer is applied to soil in the modern farming method to prevent a concentration of an element in the fertilizer from being reduced lower than a level needed. This excessive application of fertilizer causes a higher cost for the fertilizer and an environment pollution due to dispersal of the excessively applied fertilizer into the underground and into underground water.
Also, there is a problem in the method in which a plant growth is improved by a low frequency stimulus. The problem is that the plant growth is inhibited if the plant is exposed to the low frequency stimulus for a long period of time. It is necessary to stimulate the plant with the low frequency stimulus only when the growing condition of the plant is deteriorated. However, it is necessary to be trained well to judge the growing condition of the plant based on its appearance. Furthermore, it can be too late to treat the plant after a sign of deterioration of the growth condition becomes visible. Because of the reasons explained above, establishing a method, which is capable of a quick and accurate diagnosis of the status of the plant and a quick restoring of the status of the plant in a case where the status is deteriorated, has been demanded. There is another problem for the method in which a plant growth is improved by a low frequency stimulus. The problem is that diagnosing and restoring the plant status is time-consuming. Therefore, an easier method for diagnosing and restoring the plant status is needed.
The diagnosing method of a plant status using bioelectrical potential has problems since the method is not sophisticated enough currently. The problems includes a large signal noise in the measured bioelectrical potential. Therefore, further improvements are needed.

The present invention is made under the circumstance described above. The purpose of the present invention is to provide a method of diagnosing nutritional a status of a plant and an apparatus of diagnosing a nutritional status of a plant. The method and apparatus allow to diagnose the nutritional status of the plant quickly and accurately. The nutritional status means excess and deficiency of water and nutrients (nitrogen, phosphorus, potassium, calcium, magnesium, and the like). Other purpose of the present invention is to provide a method of restoring a nutritional status of a plant and an apparatus of restoring a nutritional status of a plant. The method and apparatus allow to restore the nutritional status of the plant quickly and efficiently.

### [Means for Solving the Problem]

Inventors of the present invention intensively studied the solution for the problems. The present invention is completed by finding that the nutritional status of the plant can be diagnosed quickly and accurately using a bioelectrical potential detected at a control and detection frequencies.

The first aspect of the present invention is a method of diagnosing the nutritional status of a plant including the steps of:
(a) detecting a bioelectrical potential of the plant at a control frequency and at one or more detection frequencies; and
(b) diagnosing the nutritional status of the plant based on the bioelectrical potential detected at the control frequency and the bioelectrical frequency detected at the detection frequency.
In the first aspect of the present invention, it is preferable that the control frequency is a frequency from 2 to 8 Hz or 45 to 49 Hz; and the detection frequency is a frequency from 9 to 44 Hz.
Also, in the first aspect of the present invention, it is preferable that the control frequency is a frequency from 2 to 8 Hz; and the detection frequency is a frequency from 9 to 44 Hz.
The second aspect of the present invention is a method of restoring the nutritional status of a plant including the steps of:
(a) detecting a bioelectrical potential of the plant at a control frequency and at one or more detection frequencies;
(b) diagnosing the nutritional status of the plant based on the bioelectrical potential detected at the control frequency and the bioelectrical frequency detected at the detection frequency; and
(c) restoring the nutritional status of the plant by a stimulation in which the plant is exposed to blinking light with a frequency of 44 Hz or less in a case where the nutrition status of the plant is diagnosed as being in a defective state in the step (b).
The third aspect of the present invention is a method of restoring the nutritional status of a plant including the steps of:
(a) detecting a bioelectrical potential of the plant at a control frequency and at one or more detection frequencies;
(b) diagnosing the nutritional status of the plant based on the bioelectrical potential detected at the control frequency and the bioelectrical frequency detected at the detection frequency; and
(c) restoring the nutritional status of the plant by supplying a deficient nutrient in a case where the nutrition status of the plant is diagnosed as being in a defective state in the step (b).
In the second and third aspects of the present invention, it is preferable that the control frequency is a frequency from 2 to 8 Hz or 45 to 49 Hz; and the detection frequency is a frequency from 9 to 44 Hz.
Also, in the second and third aspects of the present invention, it is preferable that the control frequency is a frequency from 2 to 8 Hz; and the detection frequency is a frequency from 9 to 44 Hz.

The fourth aspect of the present invention is an apparatus of diagnosing the nutritional status of a plant including: a bioelectrical potential detection device, which detects a bioelectrical potential of the plant at a control frequency and at one or more detection frequencies; and the nutritional status diagnosis device, which diagnoses the nutritional status of a plant based on the bioelectrical potential detected at the control frequency and the bioelectrical frequency detected at the detection frequency.
In the fourth aspect of the present invention, it is preferable that the control frequency is a frequency from 2 to 8 Hz or 45 to 49 Hz; and the detection frequency is a frequency from 9 to 44 Hz.
Also, in the fourth aspect of the present invention, it is preferable that the control frequency is a frequency from 2 to 8 Hz; and the detection frequency is a frequency from 9 to 44 Hz.
Also, in the fourth aspect of the present invention, it is preferable that the nutritional status diagnosis device outputs a signal indicating that the plant is in a poor nutritional state in a case where the bioelectrical potential detection device detects a bioelectrical potential at the detection frequency; and the outputting of the signal indicating that the plant is in a poor nutritional state is cancelled in a case where the bioelectrical potential detection device detects a bioelectrical potential at the control frequency.
The fifth aspect of the present invention is an apparatus of restoring the nutritional status of a plant including: a bioelectrical potential detection device, which detects a bioelectrical potential of the plant at a control frequency and at one or more detection frequencies; the nutritional status diagnosis device, which diagnoses the nutritional status of a plant based on the bioelectrical potential detected at the control frequency and the bioelectrical frequency detected at the detection frequency; and a stimulation device, which stimulates the plant by exposing the plant to blinking light with a frequency of 44 Hz or less in a case where the nutrition status of the plant is diagnosed as being in a defective state.
In the fifth aspect of the present invention, it is preferable that the nutritional status diagnosis device outputs a signal indicating that the plant is in a poor nutritional state in a case where the bioelectrical potential detection device detects a bioelectrical potential at the detection frequency; and the outputting of the signal indicating that the plant is in a poor nutritional state is cancelled in a case where the bioelectrical potential detection device detects a bioelectrical potential at the control frequency.
The sixth aspect of the present invention is an apparatus of restoring the nutritional status of a plant including: a bioelectrical potential detection device, which detects a bioelectrical potential of the plant at a control frequency and at one or more detection frequencies; the nutritional status diagnosis device, which diagnoses the nutritional status of a plant based on the bioelectrical potential detected at the control frequency and the bioelectrical frequency detected at the detection frequency; and a deficient nutrient supply device, which supplies a deficient nutrient to the plant in a case where the nutrition status of the plant is diagnosed as being in a defective state.
In the sixth aspect of the present invention, it is preferable that the nutritional status diagnosis device outputs a signal indicating that the plant is in a poor nutritional state in a case where the bioelectrical potential detection device detects a bioelectrical potential at the detection frequency; and the outputting of the signal indicating that the plant is in a poor nutritional state is cancelled in a case where the bioelectrical potential detection device detects a bioelectrical potential at the control frequency.
In the fifth and sixth aspects of the present invention, it is preferable that the control frequency is a frequency from 2 to 8 Hz or 45 to 49 Hz; and the detection frequency is a frequency from 9 to 44 Hz.
Also, in the fifth and sixth aspects of the present invention, it is preferable that the control frequency is a frequency from 2 to 8 Hz; and the detection frequency is a frequency from 9 to 44 Hz.

It is also effective that the apparatus of diagnosing the nutritional status of a plant and the apparatus of restoring the nutritional status of a plant of the aspects of the present invention include a tone decoder.

### [Effects of the Invention]

According to the present invention, the nutritional status of the plant can be diagnosed quickly and accurately based on the bioelectrical potential detected at the control frequency and the bioelectrical potential detected at the detection frequency.
In addition, in a case where the status of the diagnosed plant was deteriorated, the status can be restored quickly.
In addition, in a case where blinking light is used for restoring the nutritional status of the plant, the plant is exposed to the blinking light only when the status is deteriorated. Therefore, the inhibition of plant growth can be avoided even if the methods and apparatuses are used for a long period of time to plants. Furthermore, the cost for fertilizer can be reduced, and the environmental pollution can be suppressed, since the plant can utilize the fertilizer in the soil or the medium most effectively.
In addition, the diagnosis and restoration of the nutritional status of the plant can be performed automatically as a sequence of actions in a single equipment. Therefore, handlings can be simplified, and the manipulation is easy.

### BRIEF DESCRIPTION OF THE DRAWINGS

FIG. 1 is a schematic flow showing a sequence of flow in the method of diagnosing the nutritional status of a plant of the first aspect of the present invention.
FIG. 2 is a schematic flow showing a sequence of flow in the method of restoring the nutritional status of a plant of the second aspect of the present invention.
FIG. 3 is a schematic flow showing a sequence of flow in the method of restoring the nutritional status of a plant of the third aspect of the present invention.
FIG. 4 is a block diagram showing an example of a configuration of the apparatus of diagnosing the nutritional status of a plant of the fourth aspect of the present invention, and the apparatuses of restoring the nutritional status of a plant of the fifth and sixth aspects of the present invention.
FIG. 5 is a graph showing fruit yields with different colors of blinking light in a case where the plants are stimulated with blinking light in Reference Example 1.
FIG. 6 is a graph showing photosynthetic rates in leaves with different colors stimulated with different colors of blinking light in Reference Example 2.
FIG. 7 is a graph showing product yields from plants grown in media containing different concentrations of magnesium in Reference Example 3.
FIG. 8 is a graph showing magnesium contents in the dried plant bodies which are prepared from plants grown in media containing different concentrations of magnesium in Reference Example 3.
FIG. 9 is a graph showing a bioelectrical potential spectrum detected from a plant grown in a medium containing 0.50 mmole/L of magnesium in Reference Example 3.
FIG. 10 is a graph showing a bioelectrical potential spectrum detected from a plant grown in a medium containing 0.00 mmole/L of magnesium in Reference Example 3.
FIG. 11 is a graph showing a relationship between the concentration of magnesium in the medium and the amplitude of the bioelectrical potential at a frequency of 40 Hz in Reference Example 3.
FIG. 12 is a graph showing magnesium contents in the dried plant bodies which are prepared from plants grown in media containing different concentrations of magnesium, and amplitudes of bioelectrical potential detected from the corresponding plants in Reference Example 3.
FIG. 13 is a graph showing an example of the bioelectrical potential spectrum detected in Example 1.
FIG. 14 is a graph showing an example of the bioelectrical potential spectrum detected in Example 1.
FIG. 15 is a graph showing an example of the bioelectrical potential spectrum detected in Example 1.
FIG. 16 is a graph showing an example of the bioelectrical potential spectrum detected in Example 1.
FIG. 17 is a graph showing an example of the bioelectrical potential spectrum detected in Example 1.
FIG. 18 is a graph showing an example of the bioelectrical potential spectrum detected in Example 1.
FIG. 19 is a graph showing an example of the bioelectrical potential spectrum detected in Example 1.
FIG. 20 is a graph showing an example of the bioelectrical potential spectrum detected in Example 1.
FIG. 21 is a graph showing a correlation between the electrical potential in the bioelectrical potentials detected from 8 individual plants (8 examples shown in FIGS. 13 to 20) at 50 Hz and those at 2 to 8 Hz in Example 1.
FIG. 22 is a graph showing a correlation between the electrical potential in the bioelectrical potentials detected from 8 individual plants (8 examples shown in FIGS. 13 to 20) at 50 Hz and those at 45 to 49 Hz in Example 1.
FIG. 23 is a graph showing plant lengths and leaf sizes of plants grown in different testing sections in Example 2.
FIG. 24 is a graph showing bioelectrical potential spectrums in the replacement section in Example 2 at the time points of: detecting the electrical potential peak; 1 week after the medium substitution to the standard medium; and 2 weeks after the medium substitution to the poor nutrient medium.
FIG. 25 is a graph showing bioelectrical potential spectrums in the replacement section in Example 2 at the time points of: detecting the electrical potential peak; 1 week after the radiation the plant with the blinking light; and 3 weeks after the radiation the plant with the blinking light.
FIG. 26 is a graph showing the concentrations of nitrogen in nitrate-form in extracted fluid from plants in different testing sections in Example 2 at the time points of: detecting the electrical potential peak; 1 week after the detecting the electrical potential peak; and 3 weeks after the detecting the electrical potential peak.
FIG. 27 is a graph showing the concentrations of potassium in extracted fluid from plants in different testing sections in Example 2 at the time points of: detecting the electrical potential peak; 1 week after the detecting the electrical potential peak; and 3 weeks after the detecting the electrical potential peak.
FIG. 28 is a block diagram showing an example of a configuration of the apparatus of diagnosing the nutritional status of a plant of the fourth aspect of the present invention, and the apparatuses of restoring the nutritional status of a plant of the fifth and sixth aspects of the present invention, in which a tone decoder is included.

### EMBODIMENTS OF THE INVENTION

The plant used in the present invention is not particularly limited. The plant can be an edible plant, a foliage plant, and an ornamental flower. As edible plants, Cruciferae such as arugula, qing-geng-cai, daikon sprout, or the like, Asteraceae such as lettuce, Solanaceae such as tomato, Poaceae such as rice, and Chenopodiaceae such as spinach are preferable. As a foliage plant, Coleus is preferable. In addition, the present invention can be applied to corals, aquatic plants, and algae.

### [First Embodiment]

The first embodiment of the present invention is a method of diagnosing the nutritional status of a plant of the present embodiment includes the steps shown below.
(a) A step of detecting a bioelectrical potential of the plant at a control frequency and at one or more detection frequencies.
(b) A step of diagnosing the nutritional status of the plant based on the bioelectrical potential detected at the control frequency and the bioelectrical frequency detected at the detection frequency.

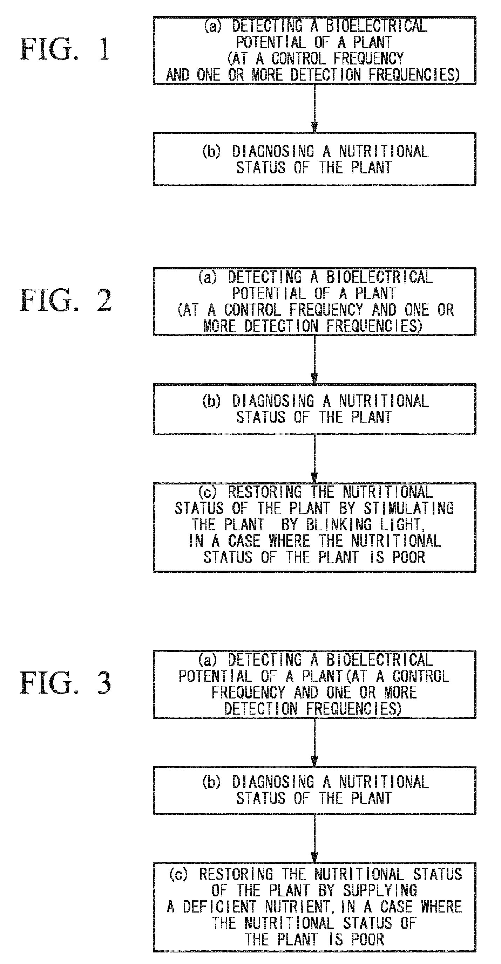

A schematic flow showing a sequence of flow in the method of diagnosing the nutritional status of a plant of the first embodiment of the present invention is shown in FIG. 1.
Detecting a bioelectrical potential of the plant means detecting an electrical potentials at a control frequency and a frequency corresponding to a certain nutrient element in order to evaluate whether the plant is insufficiently supplied with the nutrient element or not. The nutrient element is not particularly limited as long as it is a nutrient element needed for plant growth. However, it is preferable that the nutrient element is one of essential nutrient elements of plants.
The detection frequency is not particularly limited as long as deprivation of a certain nutrient element can be detected at the frequency. The detection frequency can be a frequency capable of detecting deprivation of multiple nutrient elements. Frequencies at 20 Hz and 40 Hz are examples of detection frequencies. The amplitude of bioelectric potential at 20 Hz is increased when nitrogen or potassium is deprived. The amplitude of bioelectric potential at 40 Hz is increased when magnesium, phosphorus, or calcium is deprived. In this embodiment, it is preferable that the detection frequency is in the range within 9 to 44 Hz. It is also preferable that the bioelectrical potential at 9 to 27 Hz, where deprivation of nitrogen or potassium is detected. It is also preferable that the bioelectrical potential at 28 to 44 Hz, where deprivation of magnesium, phosphorus, or calcium is detected. Detection of the bioelectrical potential becomes difficult when the detection frequency is higher than 50 Hz, since detection is interfered by a surrounding environment such as commercial power sources and sound waves.
The control frequency is not particularly limited and can be chose arbitrarily, as long as it does not overlap with the detection frequency. However, it is preferable that the control frequency is a frequency at which there is less fluctuation of the bioelectrical potential regardless of the status of the plant. Therefore, a preferable control frequency is a frequency, which is out of range of the preferable detection frequencies and is 49 Hz or less. At the frequency of 49 Hz or less, there is less interference by the environment. Such frequency can be 2 to 8 Hz or 45 to 49 Hz. More preferable control frequency is 2 to 8 Hz. Even more preferable control frequency is 3 to 8 Hz. Particularly more preferable control frequency is 5 to 7 Hz. Based on an investigation by the present inventors, there is no interference due to a nutrient deficiency at a frequency of 2 to 8 Hz. Therefore, setting the control frequency within the range is preferable.
The method of detecting the bioelectrical potential at the control frequency and one or more detection frequencies is not particularly limited. Therefore the detection can be performed by conventional methods. As an example of the detection method, the method, in which the bioelectrical potential is detected with electrodes contacting to two arbitrary positions on the plant, the detected bioelectrical potential is amplified, and the bioelectrical potentials at the control and detection frequencies are separated with a filter, is named.

In the step (b), the nutritional status of the plant is diagnosed based on the bioelectrical potential detected at the control and detection frequencies in the step (a). As explained above, by setting the control frequency at a frequency that has less fluctuation of the bioelectrical potential, the bioelectrical potential detected at the control frequency can be used as an index showing the detection sensitivity in the bioelectrical potential measurement. As a result, the accuracy of diagnosis based on the bioelectrical potential detected at the detection frequency can be improved.
The diagnosis method in this embodiment is not particularly limited. A diagnosis method can be named as an example. In the method, the ratio (S/N ratio) of the bioelectrical potential at the detection frequency (hereinafter may be referred as a "signal") to the bioelectrical potential at the control frequency (hereinafter may be referred to as a "noise") is calculated. If the S/N ratio exceeds a threshold value, detection of the bioelectrical potential at the detection frequency is confirmed. Then, a diagnosis is made that there is a deficiency of the nutrient corresponding to the detection frequency. In another method, threshold values of the signal and the noise are set in advance. If the strength of the signal exceeds its threshold value, a diagnosis is made that there is a deficiency of the nutrient corresponding to the detection frequency. However, the detected signal is ignored if the strength of the noise exceeds its threshold value. Then, a diagnosis is made that there is no deficiency of the nutrient corresponding to the detection frequency. In addition to the methods described above, combination of the two methods, or the like can be named as an example of this embodiment.
In a case where a diagnosis is made based on the S/N ratio obtained from actual measured bioelectrical potentials, it is preferable to set the threshold to 2 or higher. A more preferable threshold of the S/N ratio is 3 or higher. An even more preferable threshold is 5 or higher. In a case where threshold values of the signal and the noise are set in advance, it is preferable that the threshold value of the signal is 0.0005 mV. More preferably, the threshold value of the signal is 0.005 mV. Even more preferably, it is 0.010 mV. A preferable threshold value of the noise is 0.010 mV. More preferably, the threshold value of the noise is 0.005 mV. Even more preferably, it is 0.001 mV.
In addition, in a case where the sequential processes of the method of diagnosing the nutritional status of a plant of the first embodiment of the present invention are performed, it is preferable to use the apparatus of diagnosing the nutritional status of a plant of the fourth embodiment of the present invention, which is described later.

### [Second Embodiment]

The second embodiment of the present invention is a method of restoring the nutritional status of a plant including the steps shown below.
(a) A step of detecting a bioelectrical potential of the plant at a control frequency and at one or more detection frequencies.
(b) A step of diagnosing the nutritional status of the plant based on the bioelectrical potential detected at the control frequency and the bioelectrical frequency detected at the detection frequency.
(c) A step of restoring the nutritional status of the plant by a stimulation in which the plant is exposed to blinking light with a frequency of 44 Hz or less in a case where the nutrition status of the plant is diagnosed as being in a defective state in the step (b).
The steps (a) and (b) in the second embodiment are the same to the steps (a) and (b) in the first embodiment explained above.

A schematic flow showing a sequence of flow in the method of restoring the nutritional status of a plant of the second embodiment of the present invention is shown in FIG. 2.
The defective state in the present specification means that the plant is in a poor nutritional state, where a diagnosis is made that there is a deficiency of a nutrient element.

The light, which is irradiated in a case where a diagnosis is made that the nutritional status of the plant is deficient, is not particularly limited as long as it is blinking light. It can be a blinking light that blinks for a regular or an irregular period. The frequency of the blinking light is not particularly limited as long as it is 44 Hz or less. A preferable frequency of the blinking light is 1 to 44 Hz. More preferably, it is 5 to 36 Hz. Even more preferably, it is 9 to 36 Hz. It is particularly preferable that the frequency of the blinking light is 15 to 25 Hz. The strength of the blinking light is not particularly limited as long as it is 0.01 to 1000 Ix. The preferable strength of the blinking light is 0.1 to 100 Ix. Even more preferably, it is 0.3 to 10 Ix. It is particularly preferable that the strength of the blinking light is 0.3 to 0.6 Ix. The light can be ultra violet or infrared light, although visible light is preferable. In a case where the light is a visible light, colors of the light are not particularly limited. However, it is preferable that the color of the visible light is a warm color such as red, yellow, orange, or the like. It is particularly preferable that it is red. In the present invention, two or more types of lights can be irradiated at the same time. A preferable combination of the lights can be a warm color and a cold color such as blue or the like. The light source is not particularly limited, and an incandescent light, strobe light, LED, or the like can be used. A preferable light source is an LED. The irradiation time of the light is not particularly limited. However, there is an adversely affect on plant growth when the plant is irradiated for a prolonged period of time. Thus, it is preferable to irradiate the plant for a period ranging from 1 minute/day to 12 hours/day. More preferably, the irradiation time is a period ranging from 5 minutes/day to 6 hours/day. Even more preferably, the irradiation time is from 10 minutes/day to 3 hours/day.
The method to stimulate the plant with blinking light is not particularly limited. The plant can be irradiated by light using ordinary methods. The part at which the plant is stimulated with blinking light can be a part above the ground, such as leaf, stem, flower, or the like. Also, it can be a part under ground.

In the method of restoring the nutritional status of a plant of the second embodiment of the present invention, the steps (a), (b), and (c) can be performed on a plant all the time repeatedly. Alternatively, the steps (a), (b), and (c) can be performed in a specific growth period of the plant once or more. Performing the steps (a), (b), and (c) all the time is preferable, since the nutritional status of the plant is monitored all the time.
As a result, the stimulation with blinking light can be given to the plant only when it is needed, and the nutritional status of the plant can be restored quickly.
In addition, in a case where the sequential processes of the method of restoring the nutritional status of a plant of the second embodiment of the present invention are performed, it is preferable to use the apparatus of restoring the nutritional status of a plant of the fifth embodiment of the present invention, which is described later.

### [Third Embodiment]

The third embodiment of the present invention is a method of restoring the nutritional status of a plant including the steps shown below.
(a) A step of detecting a bioelectrical potential of the plant at a control frequency and at one or more detection frequencies;
(b) A step of diagnosing the nutritional status of the plant based on the bioelectrical potential detected at the control frequency and the bioelectrical frequency detected at the detection frequency; and
(c) A step of restoring the nutritional status of the plant by supplying a deficient nutrient in a case where the nutrition status of the plant is diagnosed as being in a defective state in the step (b).
A schematic flow showing a sequence of flow in the method of restoring the nutritional status of a plant of the third embodiment of the present invention is shown in FIG. 3.
The steps (a) and (b) in the third embodiment are the same to the steps (a) and (b) in the first embodiment explained above.

The deficient nutrient in the step (c) means a nutrient element which is diagnosed as a nutrient element insufficiently supplied in the step (b). The deficient nutrient can be supplied as the actual deficient nutrient form. Alternatively, it can be supplied as a suspension in a solvent such as water, a fertilizer formulation containing the deficient nutrient, or the like. The amount of the deficient nutrient and the period, which the deficient nutrient is given to the plant, are not particularly limited and can be set as needed.
The method the deficient nutrient is given to the plant is not particularly limited. It can be supplied to the plant by an ordinary method such as spraying, application of a mixture, or the like, to the soil, the liquid culture, stalk, leaf, root, or the like of the plant.

In the method of restoring the nutritional status of a plant of the third embodiment of the present invention, the steps (a), (b), and (c) can be performed to a plant all the time repeatedly. Alternatively, the steps (a), (b), and (c) can be performed in a specific growth period of the plant once or more. Performing the steps (a), (b), and (c) all the time is preferable, since the nutritional status of the plant is monitored all the time.
As a result, the stimulation with blinking light can be given to the plant only when it is needed, and the nutritional status of the plant can be restored quickly.
In addition, in a case where the sequential processes of the method of restoring the nutritional status of a plant of the third embodiment of the present invention are performed, it is preferable to use the apparatus of restoring the nutritional status of a plant of the sixth embodiment of the present invention, which is described later.

In addition, the method of restoring the nutritional status of a plant of the second embodiment of the present invention can be combined with that of the third embodiment of the present invention. Preferable examples of the combination are explained below.
In a combination, a diagnosis is made that there is a nutritional deficiency in a plant in the steps of (a) and (b) of the second embodiment of the present invention. Then, one of more of the sequential flow, in which the plant is stimulated by blinking light, are performed as the step (c) of the second embodiment of the present invention. Even though one or more of step (c) of the second embodiment of the present invention are performed after the diagnosis in the steps (a) and (b) of the second embodiment of the present invention, the nutritional status of the plant is still in defective state in another diagnosis. Therefore, the deficient nutrient is supplied to the plant as the step (c) of the third embodiment of the present invention.
In another combination, a diagnosis is made that there is a nutritional deficiency in a plant in the steps of (a) and (b), and one of more of the sequential flow, in which the plant is stimulated by blinking light, are performed as the step (c) of the second embodiment of the present invention. Even though one or more of step (c) of the second embodiment of the present invention are performed after the diagnosis in the steps (a) and (b) of the second embodiment of the present invention, the nutritional status of the plant is still in defective state in another diagnosis. Therefore, the stimulation with blinking light and the deficient nutrient are given to the plant concurrently, performing the steps (c) of the second and the third embodiments together.

### [Fourth Embodiment]

The fourth embodiment of the present invention is an apparatus of diagnosing the nutritional status of a plant including: a bioelectrical potential detection device, which detects a bioelectrical potential of the plant at a control frequency and at one or more detection frequencies; and the nutritional status diagnosis device, which diagnoses the nutritional status of a plant based on the bioelectrical potential detected at the control frequency and the bioelectrical frequency detected at the detection frequency.

It is preferable that electrical potentials are detected at the intended control frequency and the detection frequency with the bioelectrical potential detection device after detecting an electrical potential through electrodes attached to a plant in two different locations, amplifying the detected electrical potential, and letting the amplified electrical potential pass through a filter.
Here, the control frequency and the detection frequency are the same defined in the first embodiment of the present invention. The electrodes are not particularly limited. However, it is preferable that the electrodes are made of platinum, silver, titanium, or stainless steel. The filter is not particularly limited. However, it is preferable that the filter is a low-pass filter (LPF), a high-pass filter (HPF), or a band-pass filter (BPF). More preferably, the filter is a band-pass filter (BPF).

The nutritional status diagnosis device diagnoses the nutritional status of a plant based on the bioelectrical potentials detected at the control frequency and the detection frequency. The method of the diagnosis is the same to the method described in the first embodiment of the present invention.

In addition to the above-mentioned devices, the apparatus of diagnosing the nutritional status of a plant of the fourth embodiment of the present invention may include: the nutritional status display device, which displays a diagnosed nutritional status on a monitor or the like, or a memory device, which stores the diagnosed nutritional status as an input. These display device and memory device can be constructed using conventional methods.

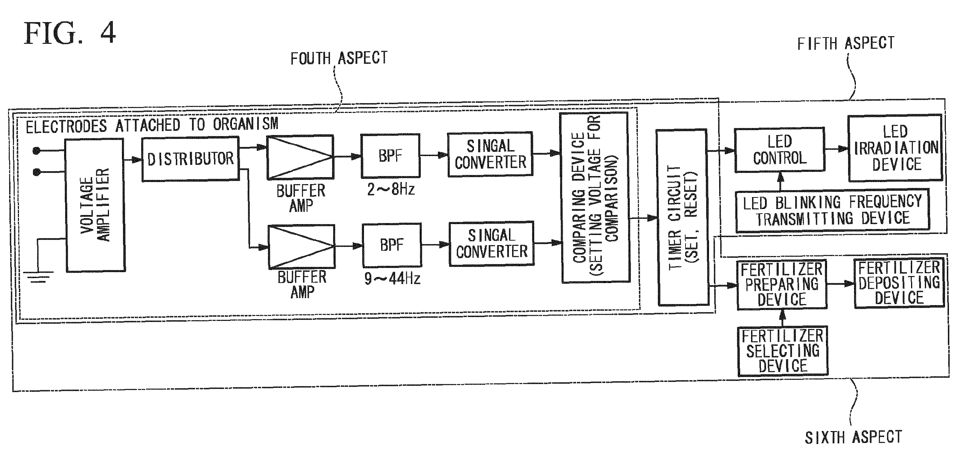

The configuration of the apparatus of diagnosing the nutritional status of a plant of the fourth embodiment of the present invention overlaps to the apparatuses of restoring the nutritional status of a plant of the fifth and sixth embodiments of the present invention, which are explained later, from the electrodes to the comparing device as shown in FIG. 4.

### [Fifth Embodiment]

The fifth embodiment of the present invention is an apparatus of restoring the nutritional status of a plant including: a bioelectrical potential detection device, which detects a bioelectrical potential of the plant at a control frequency and at one or more detection frequencies; the nutritional status diagnosis device, which diagnoses the nutritional status of a plant based on the bioelectrical potential detected at the control frequency and the bioelectrical frequency detected at the detection frequency; and a stimulation device, which stimulates the plant by exposing the plant to blinking light with a frequency of 44 Hz or less in a case where the nutrition status of the plant is diagnosed as being in a defective state.
The bioelectrical potential detection device and the nutritional status diagnosis device are the same to those described in the fourth embodiment of the present invention.

The stimulation device gives the plant a stimulation with blinking light whose frequency is 44 Hz or lower based on the diagnosis result obtained with the nutritional status diagnosis device. Types of the blinking light and the method of stimulation with blinking light are the same to those described in the second embodiment of the present invention.

FIG. 4 is a schematic diagram showing an example of a configuration of the apparatus of restoring the nutritional status of a plant of the fifth embodiment of the present invention. The configuration and mechanism of the fifth embodiment of the present invention are explained using FIG. 4. However, the fifth embodiment of the present invention is not particularly limited by FIG. 4.
A electrical potential between electrodes connected to a plant at two different locations is input to the voltage amplifier and amplified. The voltage amplifier (operational amplifier) is preferably driven by DC power source using a dry cell battery, solar cell battery, or the like in order to avoid noise contamination to the detected electrical potential.
Then, the amplified electrical potential is divided to multiple signals with the distributor. In FIG. 4, it is divided into two signals, one for the control frequency and one for the single detection frequency.
Then, the electrical potential signals that were divided into two signals are transferred to the band-pass filters (BPFs) after passing through the buffer amplifiers shown in the drawing. In the BPFs, electrical potentials at the control frequency (in this example, 2 to 8 Hz) and the detection frequency (in this example, 9 to 44 Hz) are selectively obtained. The selectively obtained electrical potentials are transferred to the signal converters to convert the signals from AC to DC. Then, the converted signals are input to the comparing device (comparator).
Here, a case, in which irradiation of blinking light for a period of time is initiated if the electrical potential at the detection frequency exceeds a pre-determined threshold value and the irradiation is stopped if the electrical potential at the control frequency exceeds a pre-determined threshold value, is explained. The electrical potential, which is detected at the detection frequency and fed to the comparator, is compared to the pre-set threshold value (comparison voltage). The comparison result is input to the timer circuit. If the electrical potential detected at the detection frequency exceeds the threshold value, the timer circuit outputs an output signal (timer set), which sets a blinking light irradiation timer. Also, the electrical potential, which is detected at the control frequency and fed to the comparator, is compared to the pre-set threshold value (comparison voltage). The comparison result is input to the timer circuit. If the electrical potential detected at the control frequency exceeds the threshold value, the timer circuit outputs an output signal (timer reset), which resets the blinking light irradiation timer.
The output signals of timer set/reset are fed to the LED control device, which is controlled by the LED blinking frequency transmitting device. As a result, the blinking light irradiation from the LED irradiation device to a plant is initiated or stopped. It is possible to pre-set a blinking frequency to the LED blinking frequency transmitting device. Alternatively, the LED blinking frequency transmitting device can output a specific frequency depending on a detection frequency.
The apparatus of restoring the nutritional status of a plant of the fifth embodiment of the present invention can be kept in a single housing. Alternatively, each device can be kept in multiple housing, or not kept in a housing. However, it is preferable to keep the apparatus in a housing, since contacting with outside can be reduced and the noise can be reduced by keeping the apparatus inside a housing. All devices of the apparatus can be kept in a single housing. Alternatively, they can be kept in different housings connected to each other. Materials and shapes of the housing are not particularly limited. However, a housing using aluminum is preferable since noise due to the magnetic field line can be reduced. Also, a housing using iron is preferable since noise due to electric force line can be reduced. A combination of the housings using aluminum and iron is more preferable.

### [Sixth Embodiment]

The sixth embodiment of the present invention is an apparatus of restoring the nutritional status of a plant including: a bioelectrical potential detection device, which detects a bioelectrical potential of the plant at a control frequency and at one or more detection frequencies; the nutritional status diagnosis device, which diagnoses the nutritional status of a plant based on the bioelectrical potential detected at the control frequency and the bioelectrical frequency detected at the detection frequency; and a deficient nutrient supply device, which supplies a deficient nutrient to the plant in a case where the nutrition status of the plant is diagnosed as being in a defective state.
The bioelectrical potential detection device and the nutritional status diagnosis device are the same to those described in the fourth embodiment of the present invention.
The deficient nutrient supply device supplies a deficient nutrient to the plant based on the diagnosis result obtained with the nutritional status diagnosis device. The method of supplying the deficient nutrient is the same as that described in the third embodiment of the present invention.

FIG. 4 is a schematic diagram showing an example of a configuration of the apparatus of restoring the nutritional status of a plant of the sixth embodiment of the present invention. As in the fifth embodiment of the present invention, the comparison result to a pre-determined threshold value obtained with the comparing device is fed to the timer circuit. Then, the timer circuit outputs an output signal (fertilizing set), which sets fertilization, or an output signal (fertilizing reset), which resets fertilization.
The fertilizing set/reset signals, which are output, are fed to the fertilizer preparing device. When the only signal fed to the fertilizer preparing device is the fertilizer set signal, fertilizer is supplied from the fertilizer depositing device. When the signals are a combination of the fertilizer set and reset signals, or the signals are solely a reset signal, supplying fertilizer is not performed. Types of the fertilizers can be chosen with the fertilizer selecting device.

Next, an example of a configuration using a tone decoder is explained, as an alternative configuration of the apparatuses of diagnosing or restoring the nutritional status of a plant.

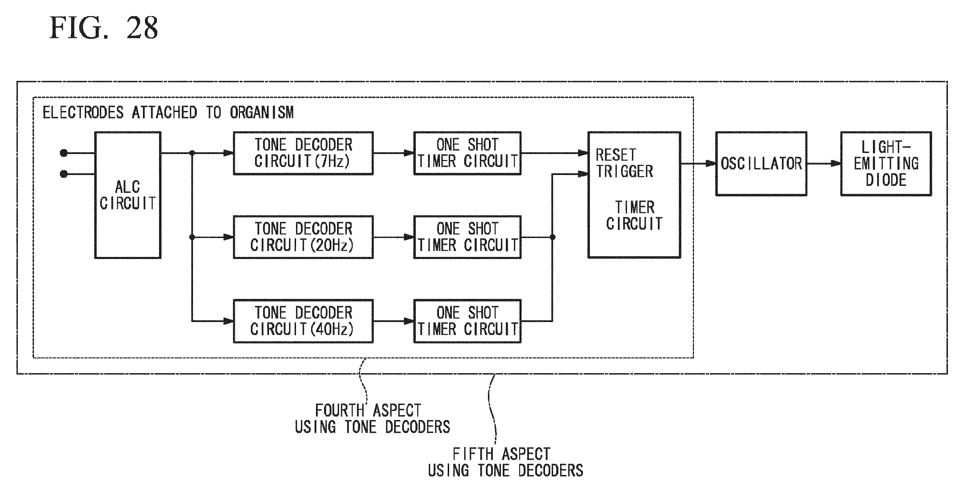

FIG. 28 is a schematic diagram showing an example of a configuration in which a tone decoder is used for the apparatus of diagnosing the nutritional status of a plant of the fourth embodiment of the present invention.
The diagnosing apparatus of the fourth embodiment of the present invention includes: a bioelectrical potential detection device, which detects a bioelectrical potential of the plant at a control frequency and at one or more detection frequencies; and the nutritional status diagnosis device, which diagnoses the nutritional status of a plant based on the bioelectrical potential detected at the control frequency and the bioelectrical frequency detected at the detection frequency. When a tone decoder is used for the fourth embodiment, the detected bioelectrical potential is stabilized with the ALC (Automatic Level Control) circuit after detecting the bioelectrical potential through electrodes attached to a plant at two different locations. Then, the electrical potentials at the control frequency and the detection frequency are detected with the tone decoder (Tone Decoder) circuit. Then, signals, which indicate that the electrical potentials at the frequencies are detected, are output for a pre-determined period of time with the one shot timer (One Shot Timer) circuit.
Here, the control frequency and the detection frequency are the same to those described in the first embodiment of the present invention. The electrodes are not particularly limited. However, it is preferable that the electrodes are made of platinum, silver, titanium, or stainless steel as in the fourth embodiment of the present invention.

The ALC circuit is a circuit keeping the level of the output voltage at a constant level. For example, a commercially available amplifier IC (Integrated Circuit) with an automatic level adjustment function can be used.
The tone decoder circuit is a circuit detecting an electrical potential at a pre-determined frequency band. For example, a commercially available tone decoder IC can be used. As the tone decoder circuit, a circuit, which is highly selective at a high frequency, such as PLL (Phase Locked Loop) type tone decoder IC, is preferable. The electrical potential detection device is installed with a tone decoder for each monitoring frequency. In the example shown in FIG. 28, the electrical potential detection device includes two tone decoders as tone decoders for detecting the detection frequencies at 20 Hz and 40 Hz. Also, the electrical potential device includes one tone decoder as a tone decoder for detecting the control frequency at 7 Hz.
The one shot timer circuit is a circuit outputting a signal for a pre-determined period of time to prevent a failure to react in a case where the tone decoder circuit detects the electrical potential at the monitoring frequency. For example, a commercially available timer IC can be used.

The nutritional status of a plant is diagnosed by the nutritional status diagnosis device based on the bioelectrical potentials detected by the electrical potential detection device at the control frequency and the detection frequencies.
Specifically, the nutritional status diagnosis device includes a timer circuit. The timer circuit outputs a signal, which indicates that a plant is in a poor nutritional status, for a pre-determined period of time in a case where a signal, which indicates that a bioelectrical potential is detected at a detection frequency, is output from the electrical potential detection device using the signal as a trigger.
The timer circuit stops (resets) outputting the signal indicating the plant is in a poor nutritional status in a case where a signal, which shows that a bioelectrical potential is detected at the control frequency, is output from the electrical potential detection device. As explained in the description of the first embodiment of the present invention, the control frequency is a frequency in which there is less fluctuation of the bioelectrical potential regardless of the nutritional status of the plant. Therefore, by stopping the output of the signal indicating that the plant is in a poor nutritional status, a false diagnosis due to a noise such as the white noise or the like can be prevented. For the nutritional status diagnosis device, a commercially available timer IC can be used.

As explained above, by configuring the apparatus for diagnosing the nutritional status of a plant using the tone decoder, the band width for detection frequency can be narrowed compared to the case in which a filter is used. When the filter is used and the frequency is x Hz, the band width of the monitoring frequency is ± 1/3 of x Hz based on their relationship. Therefore, the band width is wide and prone to pick noises. On the other hand, when the tone decoder is used, the bioelectrical potential can be detected within a narrow band width corresponding to ± 5% of the monitoring frequency. Because of this, it is possible to detect the bioelectrical potential accurately even if the signal strength is weak without amplification. As a result, the pre-main amplifier can be omitted from the apparatus, or the size of the apparatus can be reduced in the presence of the pre-main amplifier.
The apparatus of diagnosing the nutritional status of a plant can be downsized by configuring the apparatus using the tone decoder compared to a case in which the filter such as BPF or the like is used as in the fourth embodiment. As a result, electricity consumption can be reduced. The signal level of the electrical potential detected at the detection frequency is weak signal like 0.01 to 0.1 mV. Also, the background noise is relatively stronger like 0.04 mV. Therefore, for example a seven order BPF is needed if the electrical potential is detected with the BPF, making it difficult to downsize the apparatus and reduce the consumption of the electricity. Contrary to the case, if the electrical potential is detected with the tone decoder, the electrical potential can be detected with a circuit, which has a strict frequency selectivity like the above-mentioned PLL system, without a multistage filter. Thus, the apparatus can be downsized, and consumption of the electricity can be reduced significantly by using the integrated circuit. Because of the reduction of the electricity consumption of the apparatus of diagnosing the nutritional status of a plant, a small-sized nickel-cadmium battery, which is charged by a solar battery, can be used as a power source of the apparatus. As a result, the apparatus can be used in an operating environment (such as a firming field) where AC power source, such as the house hold power source, is not available. Moreover, the apparatus is not interfered by noises from AC power sources in a case where it is operated without AC power source.

FIG. 28 is a schematic diagram showing an exemplary configuration of the apparatus of restoring the nutritional status of a plant of the fifth embodiment using a tone decoder. The configuration of the apparatus and how it works are explained below. However, the present invention is not particularly limited by the description.
The apparatus of restoring the nutritional status of a plant of the fifth embodiment of the present invention includes: a bioelectrical potential detection device, which detects a bioelectrical potential of the plant at a control frequency and at one or more detection frequencies; the nutritional status diagnosis device, which diagnoses the nutritional status of a plant based on the bioelectrical potential detected at the control frequency and the bioelectrical frequency detected at the detection frequency; and a stimulation device, which stimulates the plant by exposing the plant to blinking light with a frequency of 44 Hz or less in a case where the nutrition status of the plant is diagnosed as being in a defective state. In a case where a tone decoder is used in this embodiment, the electrical potential detection device and the nutritional status diagnosis device are the same as the fourth embodiment using a tone decoder.

The stimulation device in a case where a tone decoder is used includes a light emitting diode (LED) and a oscillator (OSC), which allows the light emitting diode to blink. The stimulation device stimulates the plant by exposing the plant to blinking light with a frequency of 44 Hz or less based on the diagnosis result obtained by the nutritional status diagnosis device. The types of the blinking light and the methods to stimulate the plant with blinking light are the same to those described in the second embodiment above.
Specifically, the outputting time of the signal, which shows that the plant is in a poor nutritional status, from the nutritional status diagnosis device, is in advance set as the light irradiating time explained in the second embodiment. Because of this configuration, the nutritional status diagnosis device can function as a timer that controls the length of time for stimulating the plant by the blinking light.
The oscillator outputs a voltage signal as a block pulse at 44 Hz or less to the light emitting diode during the period in which the signal, which shows that the plant is in a poor nutritional status, is output from the nutritional status diagnosis device. For example, a commercially available timer IC can be used for the oscillator. The light emitting diode is allowed to blink by the voltage signal output from the oscillator. Because of this, the blinking light can be irradiated to the plant in this embodiment as in the second embodiment.

As in the apparatus of diagnosing the nutritional status of a plant, it is possible to narrow the band width of the monitoring frequency, downsize the apparatus, and reduce the electricity consumption in the apparatus of restoring the nutritional status of a plant by using a tone decoder, compared to the case where a filter is used.

In a case where multiple detection frequencies are detected by the apparatus of restoring the nutritional status of a plant, the apparatus can include the nutritional status diagnosis device and a stimulation device for each frequency. In this case, the plant can be stimulated by blinking lights with different colors, frequencies, and irradiation times depending on the frequency that signal is detected.
In the example explained above, an LED is used as a light source. However, the light source is not particularly limited, and other light source such as an incandescent light bulb, a strobe light, or the like can be used. For reducing electricity consumption, it is preferable to use an LED as the light source.
As in the sixth embodiment explained above, the apparatus of restoring the nutritional status of a plant can be installed with the deficient nutrient supply device, instead of or in addition to the stimulation device. In this case, the signal, which indicates that the plant is in a poor nutritional status, can be used as the fertilizing set signal. The deficient nutrient supply device supplies the deficient nutrient to the plant by depositing fertilizer as in the sixth embodiment in a case where the fertilizing set signal is output from the nutritional status diagnosis device. As in the sixth embodiment, fertilization can be stopped (reset) when the outputting of the signal, which indicates that the plant is in a poor nutritional status, from the nutritional status diagnosis device is stopped.

### [Examples]

Next, the present invention is explained even more in detail. However, the present invention is not limited by the following descriptions of examples.

### [Reference Example 1]

### [Relationship between the color of the blinking light and fruit yield]

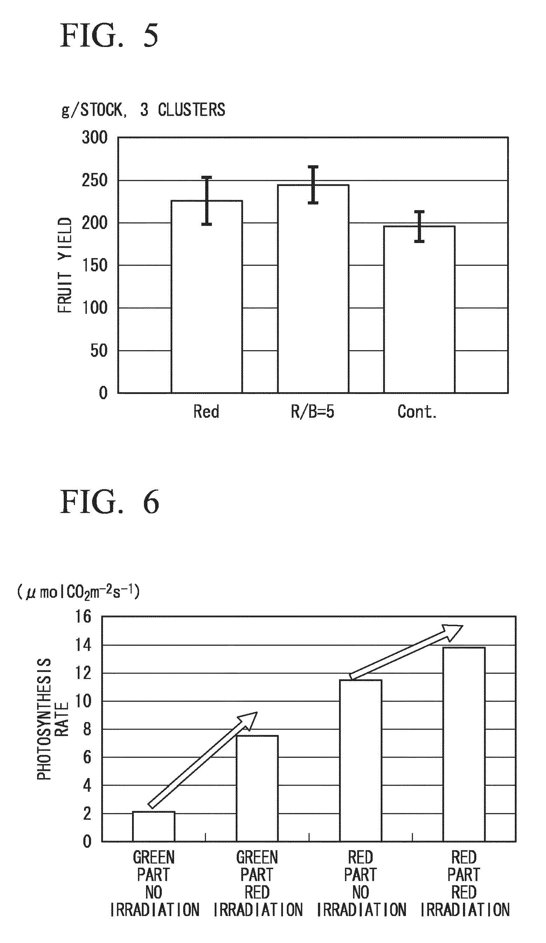

Relationship between the color of the blinking light and fruit yield using cherry tomatoes was investigated.
Specifically, cherry tomatoes (product name "Lovely Ai", produced by Kyowa Seed Co., Ltd.) were seeded April 10, 2009, and the seeded tomatoes were transplanted to a bed for hydroponic culture filled with a complete nutrients May 20, 2009. They were transplanted in three sections: a section irradiated with a red blinking light (Red); a section irradiated with a blinking light with red and blue light in a ratio of 5 to 1 (R/B=5); and a section without light irradiation (Cont). Each section contains 8 stocks. For the light source of the blinking light, an LED was used. The frequency was 20 Hz. Wave length for the red LED (product name "ER-500", produced by Stanley Electric Co., Ltd.) was 660 nm. That for the blue LED (product name "UB5305S", produced by Stanley Electric Co., Ltd.) was 470 nm. The light intensity was 1 to 20 Ix. The irradiation time was 6 hours from 9 to 15 o'clock, since photosynthesis is active in the period. The cultivation was stopped July 7, 2009, and coloring of the first flower cluster of the cherry tomatoes was observed. Then, average fruit yields per one stock to the third flower cluster at the end of the cultivation were obtained. The result was shown in FIG. 5.
Based on the result, it was demonstrated that the fruit yield was higher in the sections irradiated with blinking lights compared to one without the blinking light irradiation. Also, it was demonstrated that the fruit yield was higher in the section irradiated with the mixture of red and blue blinking lights compared to one irradiated with the red blinking light alone.

### [Reference Example 2]

### [Effects of the color of the leaf and existence/non-existence of blinking light irradiation on the photosynthesis rate]

Effects of the color of the leaf and existence/non-existence of blinking light irradiation on the photosynthesis rate were investigated using coleus having a leaf with a large variegation.
Specifically, coleus was grown under an environment with irradiation of an artificial sun light (product name "XC-1000", produced by Seric., Ltd.) at 10000 Ix. The field coleus was growing was divided into 4 sections: a section where green parts of the coleus leaves were not irradiated by the artificial sun light; a section where the green parts of the coleus leaves were irradiated by a red blinking light; a section where red parts of the coleus leaves were not irradiated by the artificial sun light; and a section where the red parts of the coleus leaves were irradiated by a red blinking light. For the red blinking light, an LED (product name "ER-500", produced by Stanley Electric Co., Ltd.) with a wavelength of 660 nm was used. The light intensity was adjusted to be 1 to 10 Ix on the surfaces of the leaves. The photosynthesis rate was measured using a photosynthesis system (product name "LI-6400", produced by LI-COR), and the results were shown in FIG. 6.
Based on the results, it was demonstrated that the photosynthesis rate was increased by exposing the leaves with the red blinking light not only on the green parts of the leaves but on the red parts in the leaves. It has been believed that the red blinking light enhances the photosynthesis through green chlorophylls of the plant. However, it was suggested that the red blinking light can enhance the photosynthesis through something else other than the green chlorophylls based on the results.

### [Reference Example 3]

### [Relationship between the magnesium deficiency and the bioelectrical potential]

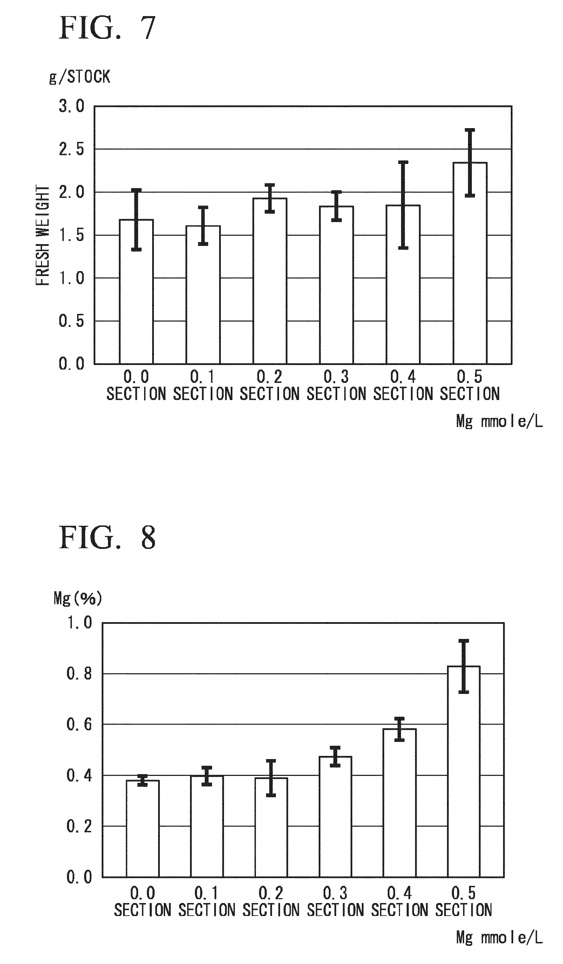

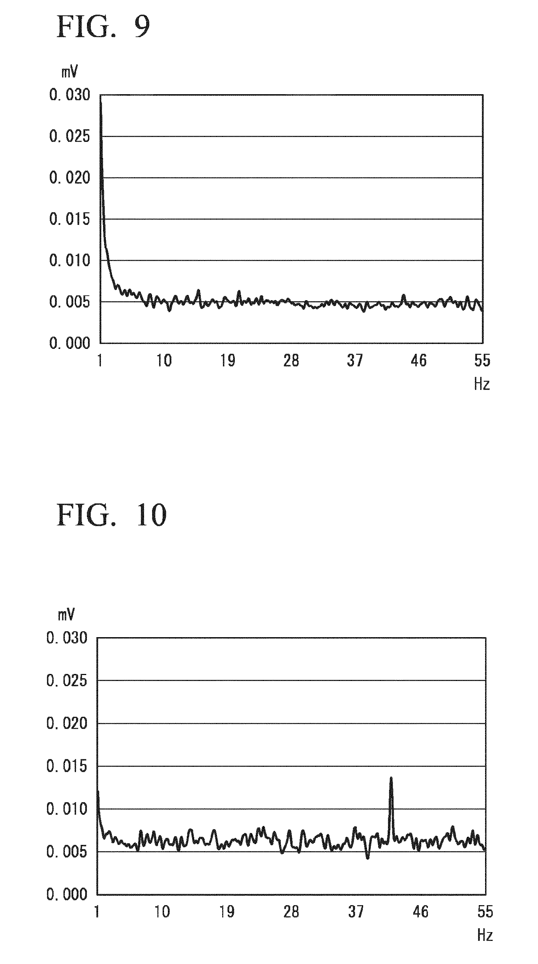

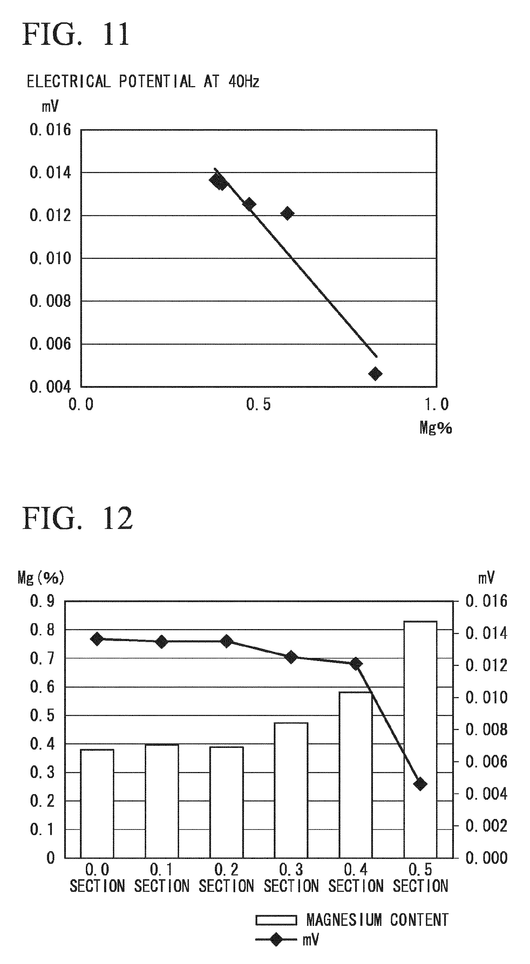

The relationship between the magnesium deficiency and the bioelectrical potential was investigated using an herb.
Specifically, arugula was seeded (seeds were produced by Tohoku Seed Co., Ltd.) on a 128-holed pot filled with the prime-mix (product name, "TKS-2", produced by Sakata Seed Co., Ltd.) on February 20, 2009. The seedlings grown in an equivalent extent obtained from the seeded plants were transplanted in the hound's-stooth pattern to a 24-holed green cell filled with the perlite after 20 days of the seeding. Then, application of a culture medium explained below was started. The bioelectrical potential on the surface of the leaf was measured April 9, 2009. The cultivation was ended April 17, 2009.
The testing field was divided in 6 testing sections with different concentrations of magnesium sulfate: a section having no magnesium sulfate; a section with magnesium sulfate of 0.10 mmole/L; a section with magnesium sulfate of 0.20 mmole/L; a section with magnesium sulfate of 0.30 mmole/L; a section with magnesium sulfate of 0.40 mmole/L; and a section with magnesium sulfate of 0.50 mmole/L (stock number in each section: 48).
For measuring the bioelectrical potential, the high-speed data collection system NR-2000 (produced by Keyence Co., Ltd.) was used. The sampling period and the data points were set 200 Hz and 2000 points, respectively. For the electrode, a silver-silver chloride electrode was used.
Average fresh weights (g) per one stock in each testing section were shown in FIG. 7. Average magnesium contents (%) in a dried plant obtained in each testing section were shown in FIG. 8. The bioelectrical potential spectrum obtained from a plant grown in the testing section having magnesium sulfate of 0.50 mmole/L was shown in FIG. 9. The bioelectrical potential spectrum obtained from a plant grown in the testing section having no magnesium sulfate was shown in FIG. 10. A correlation diagram between the magnesium content and the bioelectrical potential at 40 Hz was shown in FIG. 11 (R=-0.960). The magnesium contents and the bioelectrical potentials at 40 Hz obtained from plants grown in each testing section were shown in FIG. 12.
As shown in these results, the highest fresh weight (FIG. 7) and the highest magnesium content in the dried body (FIG. 8) were obtained in the testing section with magnesium sulfate of 0.50 mmole/L, which is the complete nutrition section. In addition, a peak near 40 Hz was detected in the bioelectrical potential in all sections except for the section with magnesium sulfate of 0.50 mmole/L (FIGS. 9 and 10, spectrums obtained from the plants grown in the sections with magnesium sulfate of 0.10 to 0.40 mmole/L were not shown). In addition, it was demonstrated that the lower the magnesium content in the arugula, the higher the peak at 40 Hz (correlativity=-0.960) (FIGS. 11 and 12). Therefore, it was concluded that the peak value is influenced by the magnesium concentration in the medium in cultivation, and the peak appears when magnesium in the plant body is not enough, causing poor growth of the plant. Also, it was suggested that the magnesium content in the plant body can be predicted by measuring the peak value at 40 Hz.

### [Example 1]

### [Diagnosis of a nutritional status of a plant using the bioelectrical potential]

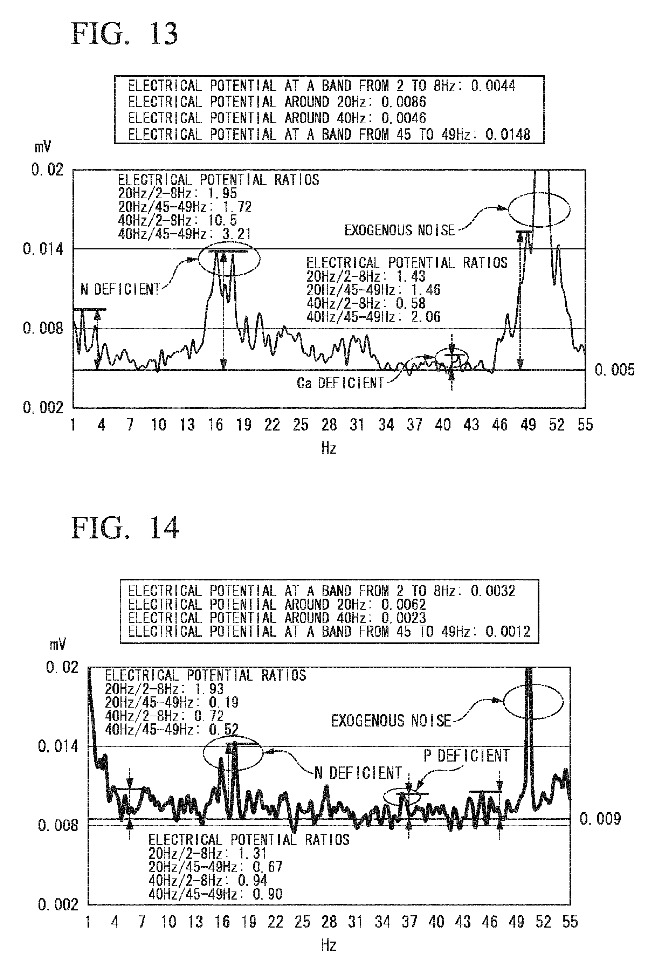

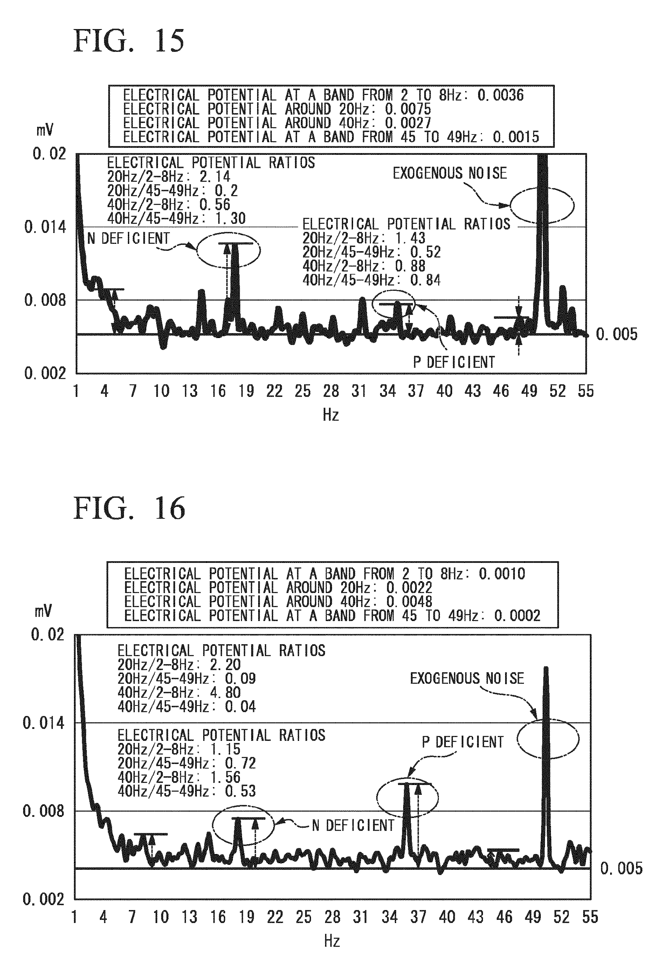

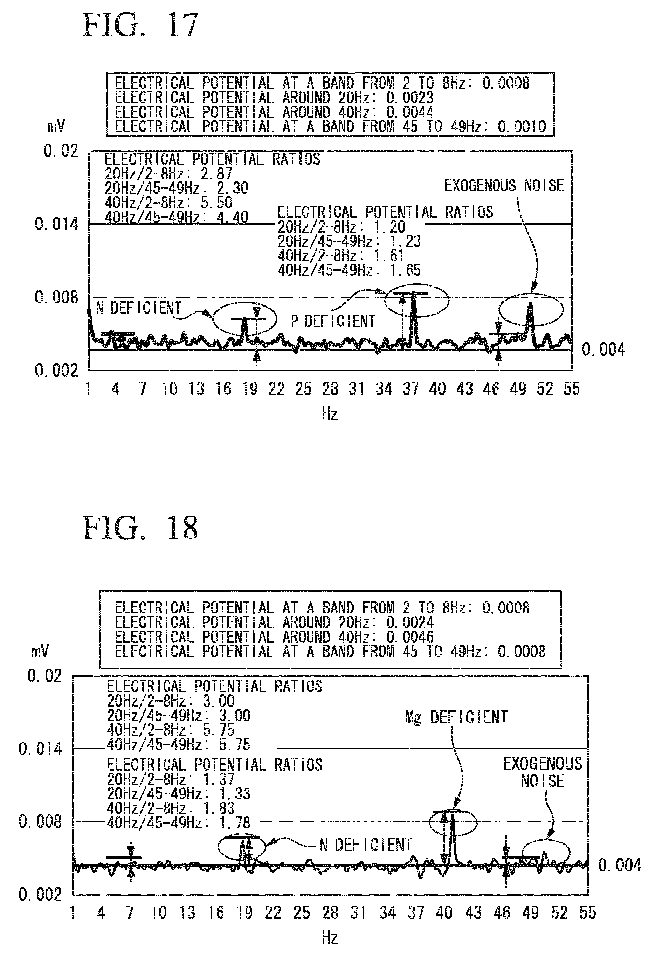

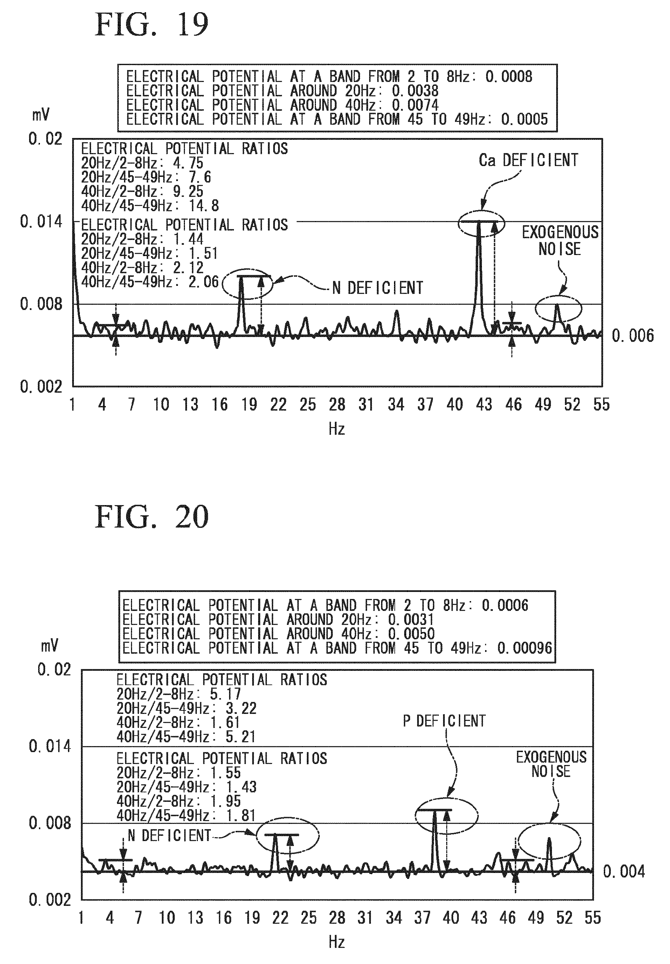

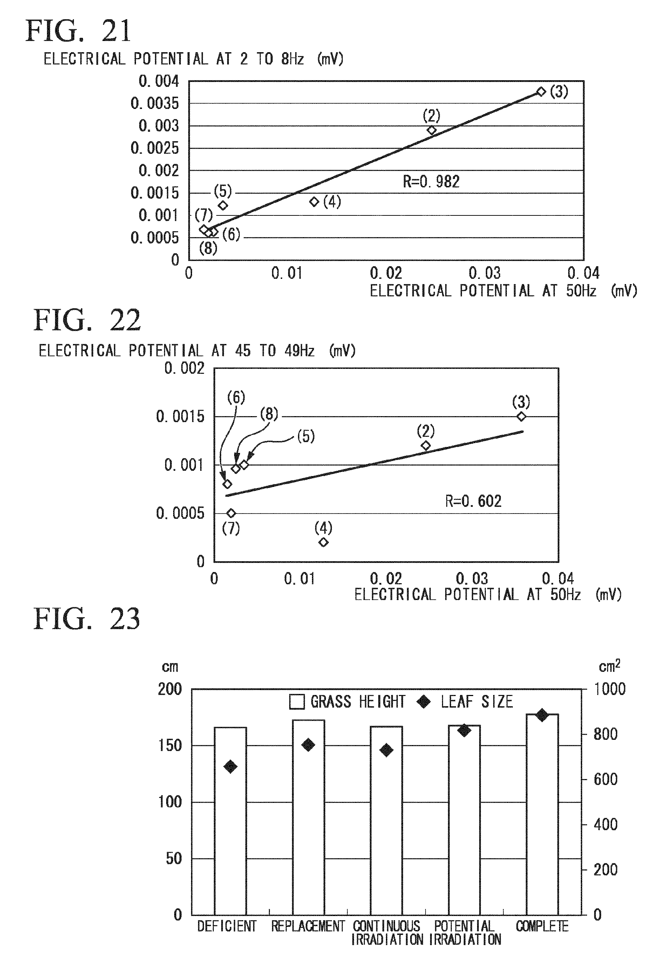

Relationship between the bioelectrical potential and the nutritional status of a plant was investigated to establish the method of diagnosing a nutritional status of a plant of the first embodiment of the present invention.
Specifically, the bioelectrical potential spectrum was measured using tomato, cherry tomato, lettuce, qing-geng-cai, and arugula. The results of the spectrums diagnosed as being in a poor nutritional state were shown in FIGS. 13 to 20. For measuring the bioelectrical potential, the high-speed data collection system NR-2000 (produced by Keyence Co., Ltd.) was used. The sampling period and the data points were set 200 Hz and 2000 points, respectively. For the electrode, a silver-silver chloride electrode was used. Based on these measured data, the control frequency for the present invention was chosen. Also, the detection frequencies were determined. As such, peaks indicating that the plant was in a poor nutritional state were detected at the frequency ranging from 9 to 44 Hz. In addition, the potential at bands ranging from 2 to 8 Hz and from 45 to 49 Hz seemed to be preferred control frequencies, since signals at the bands and the noise from the commercial power source at 50 Hz correlate extremely well. These correlation patterns were shown in FIGS. 21 and 22.

### [Example 2]

### [Restoring the nutritional status of a plant by irradiation of blinking light coupled with the bioelectrical potential]

Restoring of the nutritional status of a plant coupled with the bioelectrical potential was attempted using cherry tomatoes. In this attempt, the method of restoring the nutritional status of a plant of the second embodiment of the present invention and the apparatus of the restoring the nutritional status of a plant of the fifth embodiment of the present invention were used.
Specifically, the Yellow Mimi (product name, produced by Kaneko Seeds Co., Ltd.) was used as a testing plant. The plant was seeded on a mixed medium containing the prime-mix TKS-2 (product name, produced by Sakata Seed Co., Ltd.) and the vermiculite in the ratio of 1:1 on April 14, 2009 (on a 25-cell pot: produced by Canelon Chemical Engineering Co., Ltd.). Then, flowering seedlings were potted on a pot made of RW (10×0CV: Nitto Boseki Co., Ltd.) on May 18, 2009. Then, they were transplanted to a water culture bed (an isolated bed produced by Zen-Noh: 45cm×65cm×depth 30cm) on May 27, 2009. One half unit of the Enshi medium (prepared by using the Otsuka #1 and Otsuka #2, which are fertilizers produced by Otsuka Chemical Co., Ltd.) was applied to the medium for the water culture until EC (electrical conductivity) of the liquid culture reached to 1.2 prior to dividing of the testing section.
The testing section was divided into 5 sections based on the ways responding to detection of the electrical potential peak around 20 Hz, which shows that the plant was in nitrogen- or potassium-deficient, in electrical potential measurement performed three times in a week. The details of the 5 conditions were shown in TABLE 1. The five sections includes: a section without light irradiation or medium replacement even if the peak was detected (Deficient Section); a section where medium was replaced in the case where the peak was detected (Replacement Section); a section where a red blinking light at 20 Hz was irradiated to the plant until the end of the cultivation (irradiation time was 6 hours from 9:00am to 3:00pm) (Continuous Irradiation Section); a section where a red blinking light of 20 Hz (660 nm) was irradiated to the surface of the leaf at light intensity of 0.6 to 3 Ix using an LED (product name "ER-500", produced by Stanley Electric Co., Ltd.) for 10 minutes after the detection of the peak of 20 Hz (Potential Irradiation); and a section where the cultivation was continued with the liquid medium containing 1/2 unit of the Enshi medium (1/2 concentration of the standard medium) even after the final transplantation (Complete Section). The Enshi medium was prepared by using the Otsuka #1 and Otsuka #2, which are fertilizers produced by Otsuka Chemical Co., Ltd.. The poor nutrition medium was prepared so as to reduce the concentrations of nitrogen (N) and potassium (K) in the liquid medium containing 1/2 unit of the Enshi medium (1/2 concentration of the standard medium) to one halves, using the Otsuka #2, Otsuka #3, Otsuka #5, Otsuka #6 and Otsuka #7, which are fertilizers produced by Otsuka Chemical Co., Ltd.. The plants were pinched out leaving two upper leaves at the fourth flower cluster July 6, 2009. The cultivation was ended July 13, 2009 after finishing the investigation of plant growth.

For the investigation of the Potential Irradiation section, the apparatus of restoring the nutritional status of a plant of the fifth embodiment of the present invention shown in FIG. 4 was used.
The configuration and condition applied to the apparatus are indicated below.
Voltage amplifier: T-01 HGA (product name; produced by Turtle Industry Co., Ltd., High-impedance input)
Band pass filter (BPF): T-L/HPF04C (product name, produced by Turtle Industry Co., Ltd., 4 channels, accuracy: 18dB/oct, detection frequency: 14 to 40 Hz, control frequency: 2 to 7 Hz)
Signal converter: T-RMSO1 (product name; Turtle Industry Co., Ltd., conversion from AC to DC)
Comparator: Diagnosing a plant as being in a poor nutritional status in a case where the electrical potential at the detection frequency of 14 to 40 Hz is higher than 0.012 mV, leads to the initiation of the irradiation. The irradiation is cancelled in a case where the electrical potential at the control frequency of 2 to 7 Hz is higher than 0.006 mV even if the electrical potential at the detection frequency is higher than 0.012 mV, regarding the electrical potential at the detection frequency as a noise. In a case where both the electrical potential higher than 0.012 mV at 14 to 40 Hz and the electrical potential higher than 0.006 mV at 2 to 7 Hz are detected, the irradiation is not performed (threshold values can be set to fit to a necessity in the apparatus). The irradiation time of the red blinking light (20 Hz) is set to 10 minutes (the irradiation time can be set to fit to a necessity in the apparatus).
Housing: a housing, which is formed by combining an aluminum housing and an iron housing, is used.
In addition to the above mentioned components, two measurement assisting devices were used to perform an accurate measurement, even if they were not shown in the schematic diagram.
High speed data collection system: NR-2000 (product name; produced by Keyence Co., Ltd.)
Data analysis software: DADISP (produce name; produced by Astrodesign Inc.,)

**[TABLE 1]**

| Testing section name | Medium | Response after detection of the peak |
|---|---|---|
| Deficient | Poor nutrient medium (50% Nitrogen reduction, 50% Potassium reduction) | None |
| Replacement | | Standard medium |
| Continuous Irradiation | | 20 Hz red light irradiation |
| Potential Irradiation | | 20 Hz red light irradiation (10 min/occasion) |
| Complete | Standard medium | None |

| | | |
|---|---|---|
| *Note: ECs of the poor nutrient medium and standard medium were 1.0 and 1.35, respectively. Twenty stocks were tested in each section. In the Replacement and Complete sections, medium was replaced 2 to 3 times in a week regardless of the peak detection. | | |

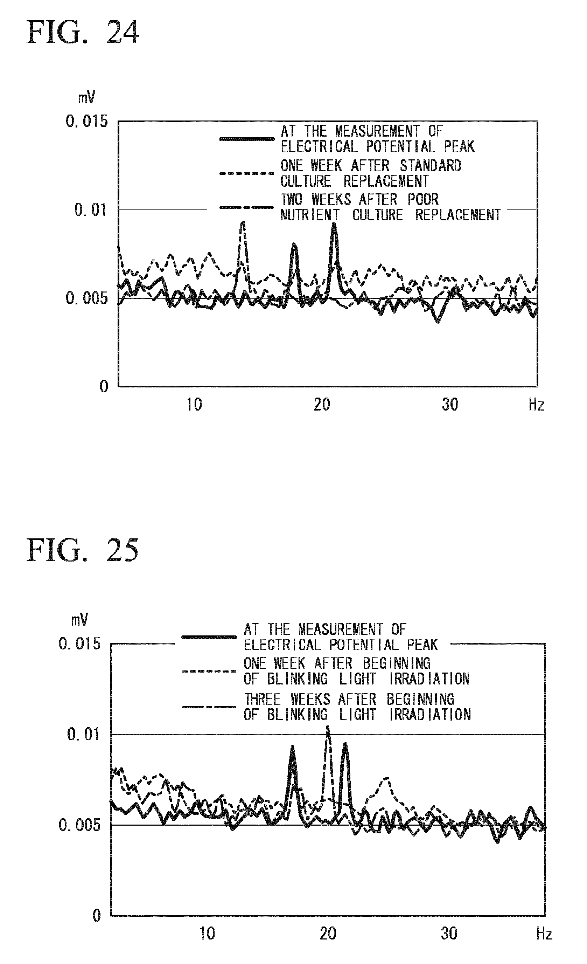

Grass heights and leaf sizes of the plants grown in all sections were shown in FIG. 23. The grass heights in the Complete and Replacement sections were about 10 cm higher than the grass heights in the other sections. However, the leaf size (leaf length × leaf width) in the Potential Irradiation section was the second after the Complete section. Also, the leaf sizes in the Replacement and Continuous Irradiation sections were the third at a almost equivalent value. It can be interpreted that that absorption of nitrogen in sulfate-form was enhanced by the irradiation of the blinking light. Particularly, the response performed in the Potential Irradiation section was more effective than the response performed in the Continuous Irradiation section. In the Potential Irradiation section, the plant was irradiated for 10 minutes once for each detection of the potential peak.
Electrical potential spectrums on the surface of the leaf in the Replacement section were shown in FIG. 24. The spectrums includes: a spectrum obtained when the electrical peak was detected; and spectrums after media were replaced. In the cultivation in the poor nutrient medium, the potential peaks near 18 Hz and 22 Hz were detected (June 18, 2009). After the detection of the peaks, the standard medium was applied to the plant in the section. One week after the application of the standard medium (June 24, 2009), the two peaks were disappeared. After the disappearing, the standard medium was replaced with the poor nutrient medium again. Two weeks after the replacement (July 9, 2009), a peak near 14 Hz appeared.
Electrical potential spectrums on the surface of the leaf in the Potential Irradiation section were shown in FIG. 25. The spectrums includes: a spectrum obtained when the electrical peak was detected; and spectrums after exposing the plant to the blinking lights. Among the potential peaks detected near 18 Hz and 22 Hz (June 18, 2009), the 18 Hz peak was disappeared after irradiation of the blinking light in the period of 3 weeks (July 9, 2009).

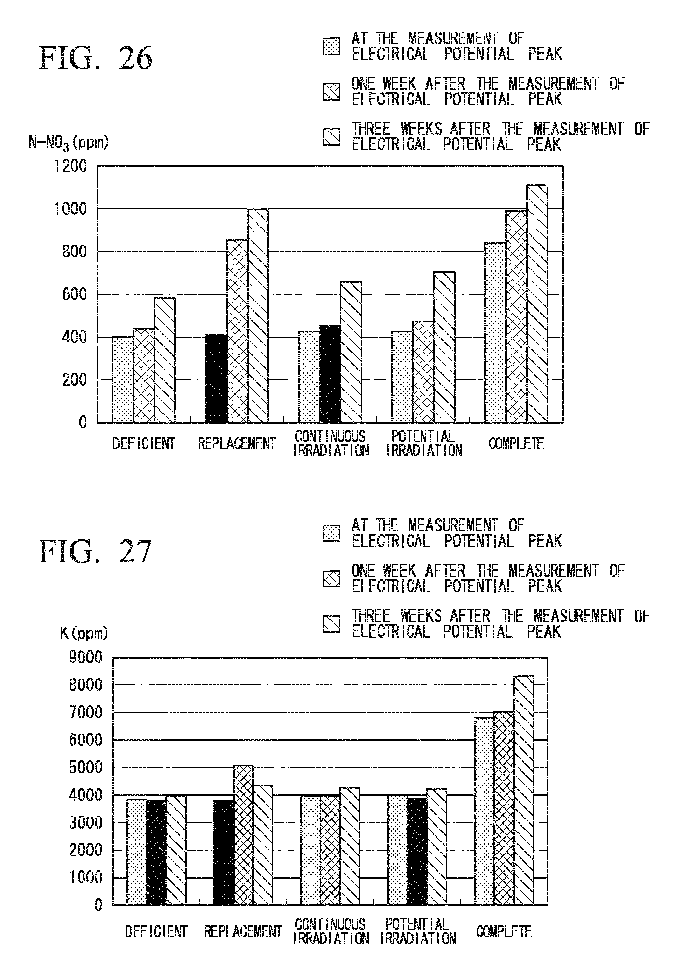

FIG. 26 shows concentrations of nitrogen in the nitrate-form contained in juice obtained from plants in each section. FIG. 27 shows concentrations of potassium in the juice. In the Replacement section, the nitrogen concentration was increased after the response, and the potassium concentration was reduced. However, the reduced value was a almost equivalent value obtained in the Continuous Irradiation section. Therefore, the 18 Hz peak detected on the surface of the leaf and appeared after the medium replacement seemed to be a peak responding to the potassium nutrient.
Based on the results shown above, it has been demonstrated that the method and the apparatus of restoring the nutritional status of a plant related to the present invention are useful for a good plant growth.

### INDUSTRIAL APPLICABILITY

The present invention has an industrial applicability since it can be effectively utilized in the plant production field such as agriculture, horticulture, or the like.

## Claims

1. A method of diagnosing the nutritional status of a plant comprising the steps of:
(a) detecting a bioelectrical potential of the plant at a control frequency and at one or more detection frequencies; and
(b) diagnosing the nutritional status of the plant based on the bioelectrical potential detected at the control frequency and the bioelectrical frequency detected at the detection frequency.

2. The method of diagnosing the nutritional status of a plant according to claim 1, wherein the control frequency is a frequency from 2 to 8 Hz or 45 to 49 Hz; and the detection frequency is a frequency from 9 to 44 Hz.

3. The method of diagnosing the nutritional status of a plant according to claim 2, wherein the control frequency is a frequency from 2 to 8 Hz; and the detection frequency is a frequency from 9 to 44 Hz.

4. A method of restoring the nutritional status of a plant comprising the steps of:
(a) detecting a bioelectrical potential of the plant at a control frequency and at one or more detection frequencies;
(b) diagnosing the nutritional status of the plant based on the bioelectrical potential detected at the control frequency and the bioelectrical frequency detected at the detection frequency; and
(c) restoring the nutritional status of the plant by a stimulation in which the plant is exposed to blinking light with a frequency of 44 Hz or less in a case where the nutrition status of the plant is diagnosed as being in a defective state in the step (b).

5. A method of restoring the nutritional status of a plant comprising the steps of:
(a) detecting a bioelectrical potential of the plant at a control frequency and at one or more detection frequencies;
(b) diagnosing the nutritional status of the plant based on the bioelectrical potential detected at the control frequency and the bioelectrical frequency detected at the detection frequency; and
(c) restoring the nutritional status of the plant by supplying a deficient nutrient in a case where the nutrition status of the plant is diagnosed as being in a defective state in the step (b).

6. The method of restoring the nutritional status of a plant according to claim 4 or 5,
wherein the control frequency is a frequency from 2 to 8 Hz or 45 to 49 Hz; and the detection frequency is a frequency from 9 to 44 Hz.

7. The method of restoring the nutritional status of a plant according to claim 6, wherein the control frequency is a frequency from 2 to 8 Hz; and the detection frequency is a frequency from 9 to 44 Hz.

8. An apparatus of diagnosing the nutritional status of a plant comprising:
a bioelectrical potential detection device, which detects a bioelectrical potential of the plant at a control frequency and at one or more detection frequencies; and
the nutritional status diagnosis device, which diagnoses the nutritional status of a plant based on the bioelectrical potential detected at the control frequency and the bioelectrical frequency detected at the detection frequency.

9. The apparatus of diagnosing the nutritional status of a plant according to claim 8, wherein the control frequency is a frequency from 2 to 8 Hz or 45 to 49 Hz; and the detection frequency is a frequency from 9 to 44 Hz.

10. The apparatus of diagnosing the nutritional status of a plant according to claim 9, wherein the control frequency is a frequency from 2 to 8 Hz; and the detection frequency is a frequency from 9 to 44 Hz.

11. The apparatus of diagnosing the nutritional status of a plant according to any one of claims 8 to 10,
wherein the nutritional status diagnosis device outputs a signal indicating that the plant is in a poor nutritional state in a case where the bioelectrical potential detection device detects a bioelectrical potential at the detection frequency; and
the outputting of the signal indicating that the plant is in a poor nutritional state is cancelled in a case where the bioelectrical potential detection device detects a bioelectrical potential at the control frequency.

12. An apparatus of restoring the nutritional status of a plant comprising:
a bioelectrical potential detection device, which detects a bioelectrical potential of the plant at a control frequency and at one or more detection frequencies;
the nutritional status diagnosis device, which diagnoses the nutritional status of a plant based on the bioelectrical potential detected at the control frequency and the bioelectrical frequency detected at the detection frequency; and
a stimulation device, which stimulates the plant by exposing the plant to blinking light with a frequency of 44 Hz or less in a case where the nutrition status of the plant is diagnosed as being in a defective state.

13. The apparatus of restoring the nutritional status of a plant according to claim 12,
wherein the nutritional status diagnosis device outputs a signal indicating that the plant is in a poor nutritional state in a case where the bioelectrical potential detection device detects a bioelectrical potential at the detection frequency; and
the outputting of the signal indicating that the plant is in a poor nutritional state is cancelled in a case where the bioelectrical potential detection device detects a bioelectrical potential at the control frequency.

14. An apparatus of restoring the nutritional status of a plant comprising:
a bioelectrical potential detection device, which detects a bioelectrical potential of the plant at a control frequency and at one or more detection frequencies;
the nutritional status diagnosis device, which diagnoses the nutritional status of a plant based on the bioelectrical potential detected at the control frequency and the bioelectrical frequency detected at the detection frequency; and
a deficient nutrient supply device, which supplies a deficient nutrient to the plant in a case where the nutrition status of the plant is diagnosed as being in a defective state.

15. The apparatus of restoring the nutritional status of a plant according to claim 14,
wherein the nutritional status diagnosis device outputs a signal indicating that the plant is in a poor nutritional state in a case where the bioelectrical potential detection device detects a bioelectrical potential at the detection frequency; and
the outputting of the signal indicating that the plant is in a poor nutritional state is cancelled in a case where the bioelectrical potential detection device detects a bioelectrical potential at the control frequency.

16. The apparatus of restoring the nutritional status of a plant according to any one of claims 12 to 15, wherein the control frequency is a frequency from 2 to 8 Hz or 45 to 49 Hz; and the detection frequency is a frequency from 9 to 44 Hz.

17. The apparatus of restoring the nutritional status of a plant according to claim 16, wherein the control frequency is a frequency from 2 to 8 Hz; and the detection frequency is a frequency from 9 to 44 Hz.
